# EUROPEAN PATENT APPLICATION

(11) **EP 4 738 000 A1**
(43) Date of publication of application: **06.05.2026**
(21) Application number: 24831814.9
(22) Date of filing: 20.06.2024
(51) Int. Cl.: G03B 5/00, G03B 17/14, H04N 23/50

(54) **INTERCHANGEABLE LENS AND IMAGING DEVICE**

(30) Priority: 30.06.2023 JP 2023108344
(71) Applicant: Sony Group Corporation, Tokyo 108-0075 (JP)
(72) Inventor: YAMAGUCHI, Yuya, Tokyo 108-0075 (JP)
(74) Representative: D Young & Co LLP
(86) International application number: PCT/JP2024/022359
(87) International publication number: WO 2025/004952

(57) **Abstract**

In an interchangeable lens, an actuator includes a coil attached to the movable body, an axial direction of the coil being an optical axis direction, and a first drive magnet and a second drive magnet positioned on opposite sides in the optical axis direction with the coil interposed therebetween, the first drive magnet is positioned closer to the fixed body than the second drive magnet, a plurality of surface portions including a main surface portion having a maximum area is provided in the magnetic plate, and the main surface portion is positioned in a state of facing the first drive magnet to be closer to the first drive magnet than a center between the first drive magnet and the second drive magnet.

## Description

### TECHNICAL FIELD

The present technology relates to a technical field of an interchangeable lens and an imaging device having a configuration in which a movable body is movable in a direction orthogonal to an optical axis direction with respect to a fixed body.

### BACKGROUND ART

An imaging device such as a video camera or a still camera or an interchangeable lens detachably attached to the imaging device includes a shake correction mechanism that moves the lens in a direction orthogonal to an optical axis direction to correct camera shake and improve image quality.

Such an interchangeable lens and imaging device include, for example, a shake correction mechanism in which a movable body having a lens is movable in a first direction orthogonal to the optical axis direction and a second direction orthogonal to both the optical axis direction and the first direction (see, for example, Patent Document 1).

In the imaging device described in Patent Document 1, two actuators each including a drive magnet, a coil, and a yoke are provided, the coil is attached to the movable body, and the drive magnet is attached to the fixed body. The movable body is moved in the first direction together with the coil of one actuator by a driving force of one actuator, and the movable body is moved in the second direction together with the coil of the other actuator by a driving force of the other actuator.

The imaging device described in Patent Document 1 has a structure in which a first drive magnet and a second drive magnet are arranged on opposite side with the coil interposed therebetween, and high drive efficiency of the shake correction mechanism can be secured. Furthermore, a plurality of rollable spheres is arranged between the fixed body and the movable body, and the movable body is set to be movable in a direction orthogonal to the optical axis direction with respect to the fixed body by rolling the spheres with respect to the fixed body and the movable body. A magnetic plate is attached to the movable body, and a position and a posture of the movable body in the optical axis direction with respect to the fixed body are maintained by attracting the magnetic plate to the drive magnet and biasing the movable body in a direction of approaching the fixed body.

### CITATION LIST

### PATENT DOCUMENT

Patent Document 1: Japanese Patent Application Laid-Open No. 2020-101783

### SUMMARY OF THE INVENTION

### PROBLEMS TO BE SOLVED BY THE INVENTION

Incidentally, in a case where the first drive magnet and the second drive magnet are arranged on opposite sides with the coil interposed therebetween in the configuration in which the rollable spheres are provided as described above, since the magnetic plate is attracted from both the first drive magnet and the second drive magnet, there is a concern that an attraction force is fluctuated by a moving position of the movable body with respect to the fixed body, and a stable posture of the movable body with respect to the fixed body is not secured.

Therefore, an object of an interchangeable lens and an imaging device according to the present technology is to suppress fluctuations in an attraction force of a drive magnet with respect to a magnetic plate at the time of shake correction and to maintain a stable posture of the movable body with respect to the fixed body.

### SOLUTIONS TO PROBLEMS

An interchangeable lens according to the present technology includes a fixed body fixed inside an external barrel, a movable body including a holding frame that holds a lens, the movable body being moved in a first direction and a second direction orthogonal to an optical axis direction with respect to the fixed body, two actuators that apply moving forces in the first direction and the second direction to the movable body, a plurality of spheres rollable between the fixed body and the movable body, and a magnetic plate that biases the movable body in a direction approaching the fixed body in the optical axis direction. The actuator includes a coil attached to the movable body, an axial direction of the coil being the optical axis direction, and a first drive magnet and a second drive magnet positioned on opposite sides in the optical axis direction with the coil interposed therebetween, the first drive magnet is positioned closer to the fixed body than the second drive magnet, a plurality of surface portions including a main surface portion having a maximum area is provided in the magnetic plate, and the main surface portion is positioned in a state of facing the first drive magnet to be closer to the first drive magnet side than a center between the first drive magnet and the second drive magnet.

Therefore, the main surface portion having the maximum area in the magnetic plate is attracted by the first drive magnet positioned closer to the fixed body than the second drive magnet.

An imaging device according to the present technology includes a fixed body fixed inside a device body including an imaging element that converts a captured optical image into an electrical signal, a movable body including a holding frame that holds a lens, the movable body being moved in a first direction and a second direction orthogonal to an optical axis direction with respect to the fixed body, two actuators that apply moving forces in the first direction and the second direction to the movable body, a plurality of spheres rollable between the fixed body and the movable body, and a magnetic plate that biases the movable body in a direction approaching the fixed body in the optical axis direction. The actuator includes a coil attached to the movable body, an axial direction of the coil being the optical axis direction, and a first drive magnet and a second drive magnet positioned on opposite sides in the optical axis direction with the coil interposed therebetween, the first drive magnet is positioned closer to the fixed body than the second drive magnet, a plurality of surface portions including a main surface portion having a maximum area is provided in the magnetic plate, and the main surface portion is positioned in a state of facing the first drive magnet to be closer to the first drive magnet than a center between the first drive magnet and the second drive magnet

Therefore, the main surface portion having the maximum area in the magnetic plate is attracted by the first drive magnet positioned closer to the fixed body than the second drive magnet.

### BRIEF DESCRIPTION OF DRAWINGS

Fig. 1 illustrates an interchangeable lens and an imaging device according to the present technology together with Figs. 2 to 11, and is a perspective view of the imaging device.
Fig. 2 is a perspective view of a shake correction mechanism.
Fig. 3 is a perspective view illustrating the shake correction mechanism in a partially exploded state.
Fig. 4 is an exploded perspective view of the shake correction mechanism.
Fig. 5 is a perspective view illustrating a movable body and the like in a state of being viewed from a direction different from that in Fig. 2.
Fig. 6 is a cross-sectional view illustrating a first actuator and the like.
Fig. 7 is a cross-sectional view illustrating a second actuator and the like.
Fig. 8 is a perspective view of a magnetic plate.
Fig. 9 is a perspective view of an actuator to which a magnetic plate according to a modification is attached.
Fig. 10 is a diagram illustrating measurement data.
Fig. 11 is a block diagram of the imaging device.

### MODE FOR CARRYING OUT THE INVENTION

Hereinafter, modes for implementing an interchangeable lens and an imaging device according to the present technology will be described with reference to the accompanying drawings.

In the modes for implementing the invention to be described below, the imaging device according to the present technology is applied to a still camera, and is applied to an interchangeable lens in which the interchangeable lens according to the present technology is detachably attached to the still camera.

Note that, application ranges of the imaging device and the interchangeable lens according to the present technology are not limited to the still camera and the interchangeable lens detachably attached to the still camera, respectively. The imaging device and the interchangeable lens according to the present technology can be widely applied to, for example, various imaging devices such as a video camera, or interchangeable lenses detachably attached to these imaging devices.

In the following description, it is assumed that front-rear, upper-lower, and left-right directions are indicated as directions viewed from a photographer at the time of imaging with the still camera. Therefore, a subject side is a front side, and a photographer side is a rear side. Therefore, an object side (subject side) is a front side, and an image plane side (photographer side) is a rear side.

Note that, the front-rear, upper-lower, and left-right directions below are for the sake of convenience in description, and the implementation of the present technology is not limited to these directions.

Furthermore, the following lens includes both a lens constituted by a single lens and a lens group constituted by a plurality of lenses.

### <Overall Configuration of Imaging Device>

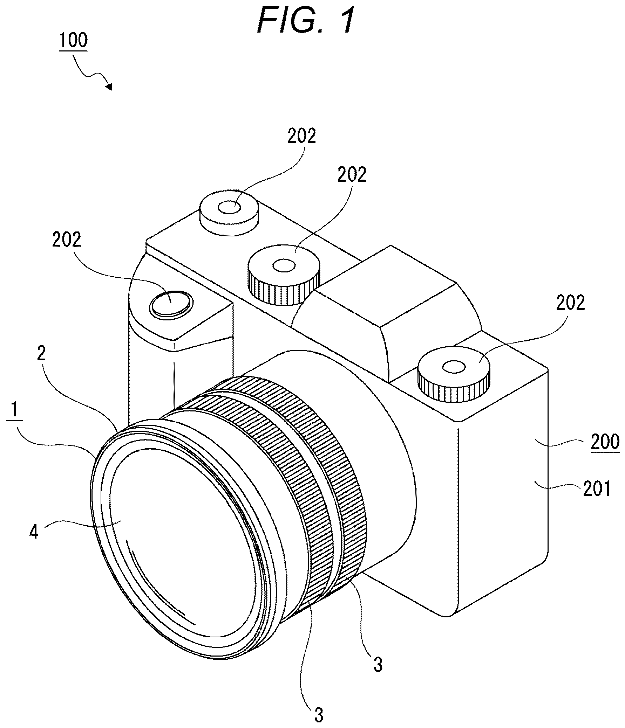

An imaging device 100 includes a device body 200, and an interchangeable lens 1 is detachably attached (see Fig. 1). However, the imaging device 100 may have a so-called retractable configuration in which a lens barrel is taken in and out, for example.

The device body 200 is formed by arranging each required unit inside and outside an outer casing 201.

In the outer casing 201, for example, a plurality of various operation units 202 is arranged on an upper surface and a rear surface. For example, a power button, a shutter button, a zoom knob, a mode switching knob, and the like are provided as the operation units 202.

A display (display unit) (not illustrated) is arranged on the rear surface of the outer casing 201. A circular opening (not illustrated) is formed on a front surface of the outer casing 201, and a portion around the opening is provided as a mount portion for attaching the interchangeable lens 1. An imaging element (not illustrated) such as a charge coupled device (CCD) or a complementary metal-oxide semiconductor (CMOS) is arranged inside the outer casing 201, and the imaging element is positioned behind the opening.

### <Configuration of Interchangeable Lens>

The interchangeable lens 1 is for an interchangeable lens digital camera, for example.

The interchangeable lens 1 includes an external barrel 2, and at least one operation ring 3 for performing focusing and zooming is provided in the external barrel 2. The operation ring 3 is rotationally operated, and thus, manual focusing and manual zooming are performed.

For example, a lens mount (not illustrated) bayonet-coupled to a mount portion of the device body 200 is provided at a rear end portion of the external barrel 2. An imaging lens 4 is attached to a front end portion of the external barrel 2.

Note that, the configuration of the interchangeable lens 1 is not limited to the above-described configuration, and may be, for example, a type in which a plurality of external barrels is provided and one external barrel is taken in and out with respect to another external barrel to change an overall length.

Inside the interchangeable lens 1, a plurality of lenses (not illustrated) is positioned to be separated in an optical axis direction (front-rear direction), and these lenses include movable lenses (movable lens group) movable in the optical axis direction and fixed lenses (fixed lens group) immovable in the optical axis direction.

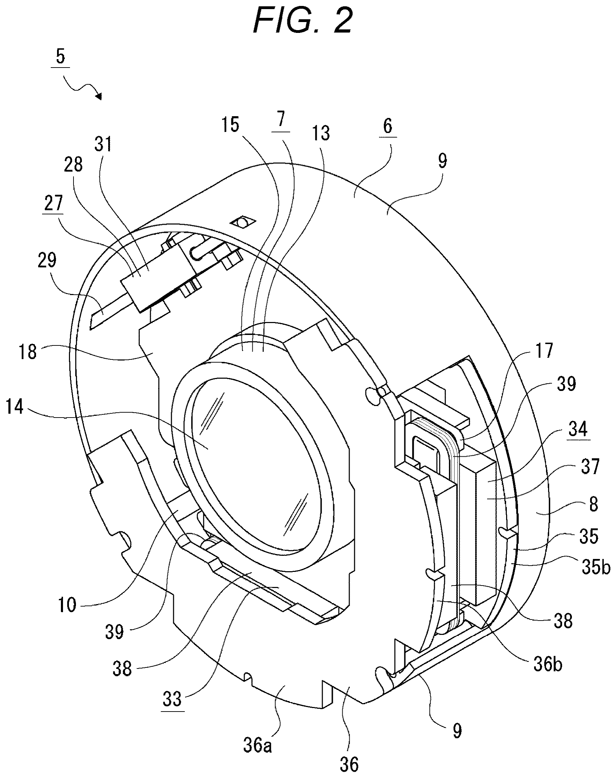

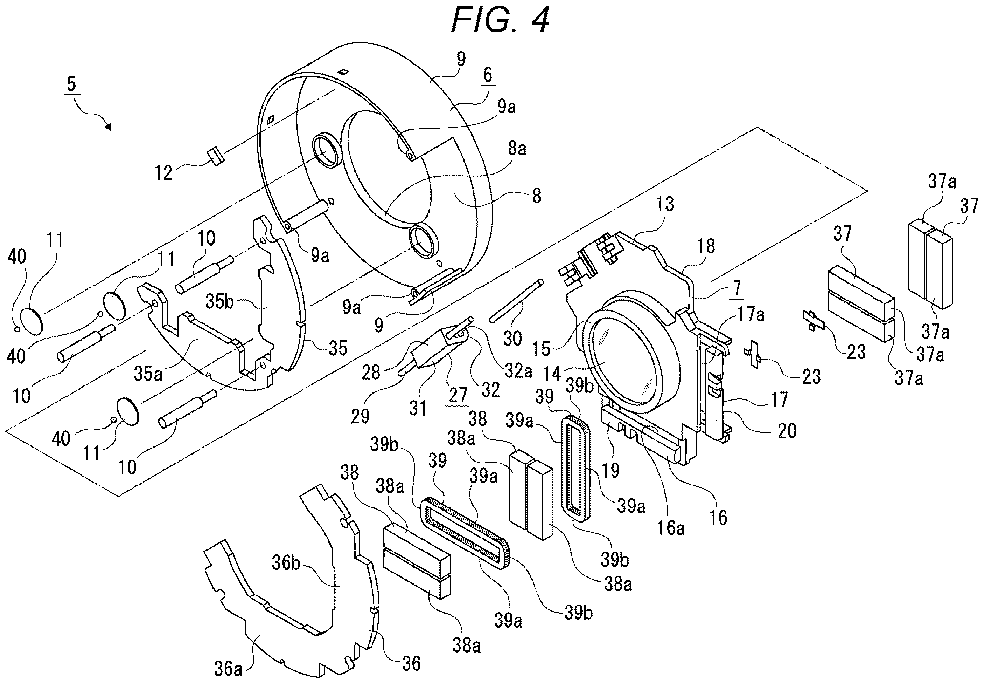

A shake correction mechanism 5 for correcting camera shake is arranged inside the interchangeable lens 1 (see Figs. 2 to 5). The shake correction mechanism 5 includes a fixed body 6 and a movable body 7. The shake correction mechanism 5 has a function of correcting camera shake by moving the movable body 7 in a first direction and a second direction orthogonal to the optical axis direction with respect to the fixed body 6.

The fixed body 6 is arranged in a fixed state inside the external barrel 2. The fixed body 6 has a substantially circular outer shape and contains a non-magnetic material such as a resin material. The fixed body 6 includes a base surface portion 8 formed in a plate-shaped annular shape facing the front-rear direction, and a plurality of peripheral surface portions 9 protruding forward from a portion excluding a part of an outer peripheral portion of the base surface portion 8. A space inside the base surface portion 8 is formed as a light transmission hole 8a.

A plurality of positioning shafts 10 extending in the front-rear direction is provided at positions near an outer periphery of the base surface portion 8 in a state of being separated in a circumferential direction. The positioning shaft 10 is provided as an insertion portion 10a in which diameters of both front and rear end portions are set to be smaller than diameters of other portions.

For example, three disk-shaped receiving plates 11 are attached to the base surface portion 8 at equal intervals in a circumferential direction. The receiving plate 11 is in a state where a front surface is exposed forward. A biasing plate metal 12 is attached to the base surface portion 8 at a position between two receiving plates 11.

A plurality of cylindrical attachment bosses 9a is provided at a front end portion of the peripheral surface portion 9 so as to be spaced apart from each other in a circumferential direction.

The movable body 7 is supported by the fixed body 6 so as to be movable in the first direction (upper-lower direction) and the second direction (left-right direction) orthogonal to the optical axis direction, and includes a holding frame 13 and a lens 14.

The holding frame 13 contains a non-magnetic material such as a resin material, and includes a holding portion 15 having a substantially annular shape, and a first coupling protrusion 16, a second coupling protrusion 17, and an overhanging protrusion 18 protruding from the holding portion 15. The lens 14 is held by the holding portion 15, and a thickness direction of the lens 14 is set to the optical axis direction (front-rear direction).

The first coupling protrusion 16 protrudes downward from the holding portion 15 and is formed in a horizontally long shape, and the second coupling protrusion 17 protrudes to one side from the holding portion 15 and is formed in a vertically long shape. A protruding direction of the overhanging protrusion 18 from the holding portion 15 is in a range from an upper side to the other side.

The first coupling protrusion 16 is formed in a horizontally long frame shape, and an inner space is formed as a through-hole 16a. The second coupling protrusion 17 is formed in a vertically long frame shape, and an inner space is formed as a through-hole 17a.

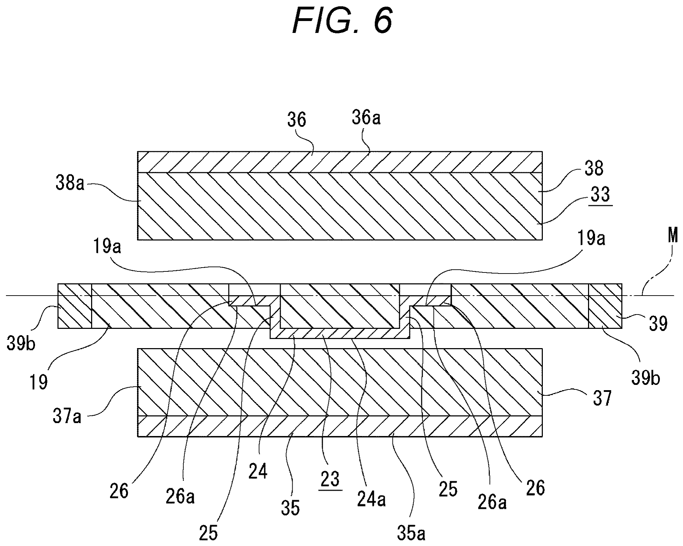

A lower end portion of the first coupling protrusion 16 is provided as a first attachment portion 19 extending horizontally (see Fig. 6). In the first attachment portion 19, recesses 19a opened forward are formed to be horizontally separated.

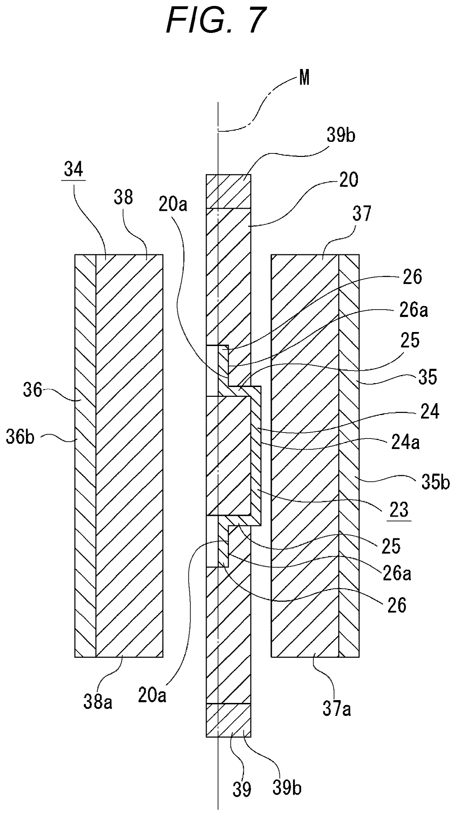

An outer end portion of the second coupling protrusion 17 is provided as a second attachment portion 20 extending vertically (see Fig. 7). In the second attachment portion 20, recesses 20a opened forward are formed to be vertically separated, and a portion between the recesses 20a coincides with a central portion of the second attachment portion 20 in the upper-lower direction.

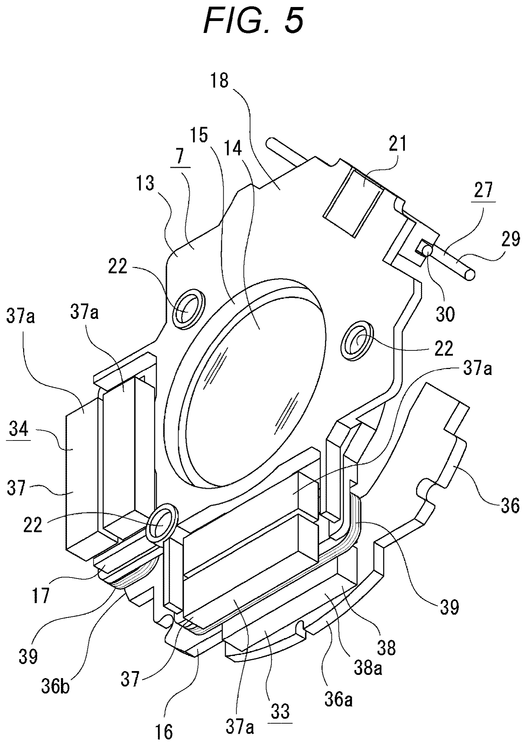

An attraction suction magnet 21 is attached to a rear surface of the overhanging protrusion 18 at a central portion in a circumferential direction (see Fig. 5).

For example, three pressing plates 22 are attached to a rear surface side of the holding portion 15. The pressing plate 22 is formed in, for example, a disk shape, and has a rear surface exposed rearward.

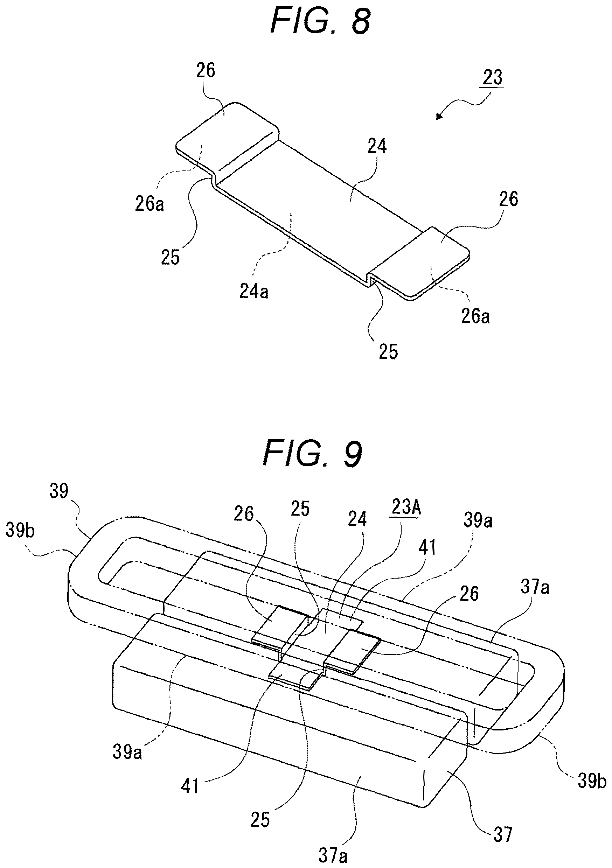

A magnetic plate 23 containing a metal material is attached to the first attachment portion 19 of the first coupling protrusion 16 (see Figs. 6 and 8). For example, the magnetic plate 23 is integrally molded with the first coupling protrusion 16 by insert molding. However, the magnetic plate 23 may be attached to the first attachment portion 19 by adhesion or the like.

The magnetic plate 23 is formed by bending a plate-shaped material into a predetermined shape, and includes a main surface portion 24 formed in a rectangular shape facing the front-rear direction, a pair of coupling surface portions 25 protruding in the same direction from both end portions of the main surface portion 24, and a pair of overhanging surface portions 26 protruding in a direction separated from each other from distal end portions of the coupling surface portions 25. The coupling surface portion 25 is bent at a right angle with respect to the main surface portion 24, and the overhanging surface portion 26 is bent at a right angle with respect to the coupling surface portion 25. In the magnetic plate 23, an area of the main surface portion 24 is larger than an area of the overhanging surface portion 26, and the main surface portion 24 has a maximum area. The main surface portion 24 has a rear surface formed as a facing surface 24a.

The magnetic plate 23 is attached to the first attachment portion 19 in a state where a longitudinal direction of the main surface portion 24 is in the left-right direction. In the magnetic plate 23, each of the pair of overhanging surface portions 26 is positioned in the recess 19a formed in the first attachment portion 19, one surface of each of the pair of overhanging surface portions 26 in a thickness direction is formed as an attached surface 26a, and the attached surface 26a is brought into surface contact with each portion of the first attachment portion 19.

A magnetic plate 23 is also attached to the second attachment portion 20 of the second coupling protrusion 17 (see Figs. 7 and 8). For example, the magnetic plate 23 is integrally molded with the second coupling protrusion 17 by insert molding. However, the magnetic plate 23 may be attached to the second attachment portion 20 by adhesion or the like.

The magnetic plate 23 is attached to the second attachment portion 20 in a state where the longitudinal direction of the main surface portion 24 is in the upper-lower direction. In the magnetic plate 23, each of the pair of overhanging surface portions 26 is positioned in the recess 20a formed in the second attachment portion 20, and one surface of each of the pair of overhanging surface portions 26 in the thickness direction is brought into surface contact with each portion of the second attachment portion 20.

The movable body 7 is supported by the fixed body 6 via a correction drive system 27 that corrects focus movement and is also called a compensator. The correction drive system 27 includes a support arm 28, a first shaft member 29, and a second shaft member 30.

The support arm 28 includes a coupling portion 31 extending in a predetermined direction, for example, a direction inclined by 45 degrees with respect to both the upper-lower direction and the left-right direction, and a pair of support portions 32 protruding in the same direction (rear side) orthogonal to both end portions of the coupling portion 31 in a longitudinal direction, and has long hole-shaped shaft support holes 32a at distal end portions of the support portions 32. The shaft support hole 32a is formed in a shape long in a protruding direction of the support portion 32 with respect to the coupling portion 31.

The first shaft member 29 is penetrated by the pair of support portions 32, and both end portions thereof are fixed to the peripheral surface portion 9 of the fixed body 6. The support arm 28 is slidable with respect to the first shaft member 29 in an axial direction of the first shaft member 29 and is rotatable around the axis with the first shaft member 29 as a fulcrum.

The second shaft member 30 is inserted into the shaft support holes 32a of the pair of support portions 32, and a portion between the shaft support holes 32a is fixed to the overhanging protrusion 18 of the movable body 7. The second shaft member 30 is positioned parallel to the first shaft member 29 and is movable in a longitudinal direction of the shaft support hole 32a.

In the imaging device 100, the movable body 7 is moved in the first direction (upper-lower direction) and the second direction (left-right direction) orthogonal to the optical axis direction with respect to the fixed body 6. However, since the correction drive system 27 described above is provided and the first shaft member 29 and the second shaft member 30 are constantly held in parallel, the movable body 7 is not rotated in a roll direction in a plane orthogonal to an optical axis with respect to the fixed body 6.

As described above, the movable body 7 is moved in the upper-lower direction and the left-right direction with respect to the fixed body 6, the movement in the upper-lower direction is performed by a driving force of a first actuator 33, and the movement in the left-right direction is performed by a driving force of a second actuator 34.

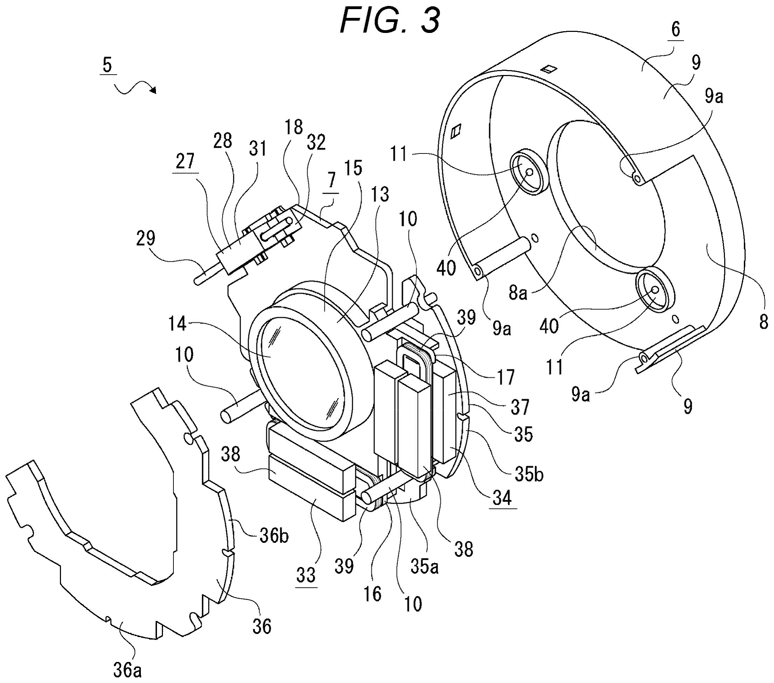

The first actuator 33 includes a part of a rear yoke 35, a part of a front yoke 36, a first drive magnet 37, a second drive magnet 38, and a coil 39 (see Figs. 3 to 6).

The rear yoke 35 is formed in a plate shape facing the front-rear direction and is formed in a substantially arc shape. The rear yoke 35 includes a first magnet attachment portion 35a and a second magnet attachment portion 35b, and the first magnet attachment portion 35a and the second magnet attachment portion 35b have areas larger than areas of other portions. The rear yoke 35 is arranged on a front surface side of the base surface portion 8 in the fixed body 6 in a state where the insertion portion 10a on a rear side of the positioning shaft 10 is inserted from a front side.

The front yoke 36 is formed in a plate shape facing the front-rear direction, and is formed in a substantially arc shape. The front yoke 36 has a first magnet attachment portion 36a and a second magnet attachment portion 36b, and the first magnet attachment portion 36a and the second magnet attachment portion 36b have areas larger than areas of other portions. The front yoke 36 is attached to the attachment bosses 9a of the peripheral surface portion 9 by screwing or the like in a state where the insertion portion 10a on a front side of the positioning shaft 10 is inserted from a rear side, and the first magnet attachment portion 36a is positioned on a front side of the first magnet attachment portion 35a and the second magnet attachment portion 36b is positioned on a front side of the second magnet attachment portion 35b.

The insertion portion 10a of the positioning shaft 10 is inserted into each of the rear yoke 35 and the front yoke 36, and thus, the rear yoke and the front yoke are positioned in the optical axis direction and held at constant intervals.

The first drive magnet 37 includes, for example, two magnets 37a having a rectangular parallelepiped shape. The first drive magnet 37 is attached to a front surface of the first magnet attachment portion 35a of the rear yoke 35 in a state where the two magnets 37a are horizontally oriented and vertically aligned.

The second drive magnet 38 includes, for example, two magnets 38a having a rectangular parallelepiped shape. The second drive magnet 38 is attached to a rear surface of the first magnet attachment portion 36a of the front yoke 36 in a state where the magnets 38a are horizontally oriented and vertically aligned.

The coil 39 is formed in a rectangular tube shape, and an axial direction thereof is the front-rear direction. The coil 39 includes a pair of longitudinal portions 39a and a pair of lateral portions 39b. The coil 39 is attached to a front surface of the first coupling protrusion 16 in a state where the pair of longitudinal portions 39a is positioned to be vertically separated and the pair of lateral portions 39b is positioned to be horizontally separated. In a state where the coil 39 is attached to the first coupling protrusion 16, the magnetic plate 23 attached to the first attachment portion 19 is surrounded by the coil 39, and the coil 39 and the magnetic plate 23 are positioned between the first drive magnet 37 and the second drive magnet 38.

In a state where the magnetic plate 23 is attached to the first attachment portion 19, the main surface portion 24 having the maximum area is positioned closer to the first drive magnet 37 than a center M between the first drive magnet 37 and the second drive magnet 38, and the facing surface 24a is positioned to face the first drive magnet 37. Therefore, the magnetic plate 23 is exposed from the first coupling protrusion 16 toward the first drive magnet 37.

The second actuator 34 includes a part of the rear yoke 35, a part of the front yoke 36, the first drive magnet 37, the second drive magnet 38, and the coil 39, but each part is oriented differently from the first actuator 33 (see Figs. 3, 4, 5, and 7).

In the second actuator 34, the two magnets 37a are attached to a front surface of the second magnet attachment portion 35b in the rear yoke 35 in a state of being vertically oriented and horizontally aligned, and the two magnets 38a are attached to a rear surface of the second magnet attachment portion 36b in the front yoke 36 in a state of being vertically oriented and horizontally aligned.

The coil 39 of the second actuator 34 is attached to a front surface of the second coupling protrusion 17 in a state where the axial direction is the front-rear direction, the pair of longitudinal portions 39a is positioned to be horizontally separated, and the pair of lateral portions 39b is positioned to be vertically separated In a state where the coil 39 is attached to the second coupling protrusion 17, the magnetic plate 23 attached to the second attachment portion 20 is surrounded by the coil 39, and the coil 39 and the magnetic plate 23 are positioned between the first drive magnet 37 and the second drive magnet 38.

In a state where the magnetic plate 23 is attached to the second attachment portion 20, the main surface portion 24 having the maximum area is positioned closer to the first drive magnet 37 than the center M between the first drive magnet 37 and the second drive magnet 38, and the facing surface 24a is positioned to face the first drive magnet 37. Therefore, the main surface portion 24 of the magnetic plate 23 is exposed from the second coupling protrusion 17 to the first drive magnet 37 side.

In the interchangeable lens 1, each part of a flexible printed wiring board (not illustrated) connected to a control circuit (not illustrated) is attached to a front surface of the holding frame 13 or a front surface of the coil 39, and a drive current is supplied from the control circuit to the coil 39 via the flexible printed wiring board.

The movable body 7 is positioned in a space on an inner surface side of the peripheral surface portion 9 on a front side of the base surface portion 8 in the fixed body 6, and is supported by the fixed body 6 via the correction drive system 27 (see Fig. 2). At this time, the spheres 40 are arranged between the receiving plate 11 attached to the fixed body 6 and the pressing plate 22 attached to the movable body 7. The sphere 40 is rolled with respect to the receiving plate 11 and the pressing plate 22 when the movable body 7 is moved with respect to the fixed body 6, and has a function of smoothly moving the movable body 7 with respect to the fixed body 6 in a state where the movable body 7 is held at a constant distance with respect to the base surface portion 8.

Position detection sensors (not illustrated) are implemented on rear surfaces of portions attached to the two coils 39 in the flexible printed wiring board, and the position detection sensors are positioned in a state of being surrounded by the coils 39 and facing the first drive magnet 37.

Therefore, when the movable body 7 is moved in the upper-lower direction with respect to the fixed body 6, a change in a magnetic flux generated in the first drive magnet 37 of the first actuator 33 is detected by one position detection sensor, and a moving position of the movable body 7 in the upper-lower direction is detected on the basis of the detection result. Furthermore, a change in a magnetic flux generated in the first drive magnet 37 of the second actuator 34 is detected by the other position detection sensor, and a moving position of the movable body 7 in the left-right direction is detected on the basis of the detection result.

As described above, in the interchangeable lens 1, since a position of the movable body 7 is detected by using the first drive magnet 37 of the first actuator 33 (second actuator 34), detection accuracy can be improved, and the number of parts of the interchangeable lens 1 and the size thereof can be reduced without requiring a dedicated magnet for position detection.

In a state where the movable body 7 is positioned on the front side of the base surface portion 8 and supported by the fixed body 6 via the correction drive system 27, the magnetic plates 23 attached to the first coupling protrusion 16 and the second coupling protrusion 17 are attracted to the first drive magnets 37, and the attraction magnet 21 attached to the holding frame 13 of the movable body 7 is attracted to the biasing plate metal 12 attached to the base surface portion 8 of the fixed body 6. Therefore, the movable body 7 is attracted toward the fixed body 6 by a magnetic force, the pressing plates 22 attached to the holding frame 13 are pressed against the spheres 40, the spheres 40 are pressed against the receiving plates 11 of the fixed body 6, and the spheres 40 are smoothly rolled with respect to the pressing plates 22 and the receiving plates 11 when the movable body 7 moves with respect to the fixed body 6.

### <Operation in Interchangeable Lens>

In the interchangeable lens 1 having the above configuration, when camera shake occurs at the time of imaging or the like, a state of the camera shake is detected by a camera shake detection unit, a detection result is sent, as an analog signal, to a camera shake signal processing unit, and the sent analog signal is converted into a digital signal indicating a magnitude and a direction of the camera shake by the camera shake signal processing unit and sent to a control unit. For example, a gyro sensor or the like is used as the camera shake detection unit.

On the other hand, the position of the movable body 7 is detected by the position detection sensor described above, a detection result is sent, as an analog signal, to a position detection signal processing unit, and the sent analog signal is converted into a digital signal indicating the position of the movable body 7 by the position detection signal processing unit and sent to the control unit.

When the digital signals are input from the camera shake signal processing unit and the position detection signal processing unit to the control unit, feedback control is performed on the basis of both the input digital signals, a drive current of a predetermined magnitude and a predetermined direction is supplied to both or one of the coil 39 of the first actuator 33 and the coil 39 of the second actuator 34, and a camera shake correction operation is performed by the shake correction mechanism 5.

When the drive current is supplied to the coil 39 of the first actuator 33, a moving force in the upper-lower direction is applied to the coil 39 in a relationship between the magnetic fluxes generated in the first drive magnet 37 and the second drive magnet 38, and the movable body 7 is moved in the upper-lower direction with respect to the fixed body 6 with the movement of the coil 39. At this time, in the correction drive system 27, the support arm 28 is moved in the axial direction of the first shaft member 29 with respect to the first shaft member 29, the second shaft member 30 is moved with respect to the shaft support hole 32a of the support arm 28, and the movable body 7 is moved in the upper-lower direction without being rotated in the roll direction.

When the drive current is supplied to the coil 39 of the second actuator 34, a moving force in the left-right direction is applied to the coil 39 in a relationship between the magnetic fluxes generated in the first drive magnet 37 and the second drive magnet 38, and the movable body 7 is moved in the left-right direction with respect to the fixed body 6 with the movement of the coil 39. At this time, in the correction drive system 27, the support arm 28 is moved in the axial direction of the first shaft member 29 with respect to the first shaft member 29, the second shaft member 30 is moved with respect to the shaft support hole 32a of the support arm 28, and the movable body 7 is moved in the left-right direction without being rotated in the roll direction.

In the interchangeable lens 1, since the first drive magnet 37 and the second drive magnet 38 are positioned on an opposite side with the coil 39 interposed between the first actuator 33 and the second actuator 34, a large magnetic flux is generated in the first actuator 33 and the second actuator 34, a large driving force is applied to the movable body 7, and an efficient shake correction operation is performed.

As described above, in the interchangeable lens 1, a position and a posture of the movable body 7 with respect to the fixed body 6 are maintained by attracting the magnetic plates 23 attached to the first coupling protrusion 16 and the second coupling protrusion 17, but a position of the magnetic plate 23 with respect to the first drive magnet 37 and the second drive magnet 38 is changed by moving the movable body 7 by the shake correction operation. Therefore, magnetic forces of the first drive magnet 37 and the second drive magnet 38 with respect to the magnetic plate 23 are changed with the movement of the movable body 7.

However, as described above, in the magnetic plate 23, the main surface portion 24 having the maximum area is positioned closer to the first drive magnet 37 than the center M between the first drive magnet 37 and the second drive magnet 38, and the facing surface 24a is positioned to face the first drive magnet 37. Therefore, even though the position of the magnetic plate 23 with respect to the first drive magnet 37 and the second drive magnet 38 is changed with the movement of the movable body 7, the magnetic plate 23 is attracted by the first drive magnet 37 by a sufficient magnetic force regardless of the change in the position. Therefore, the pressing plates 22 attached to the holding frame 13 are reliably pressed against the spheres 40, and the spheres 40 are reliably pressed against the receiving plates 11 of the fixed body 6. Thus, a stable posture of the movable body 7 with respect to the fixed body 6 is secured regardless of the moving position of the movable body 7 with respect to the fixed body 6 at the time of the shake correction operation.

In particular, the main surface portion 24 of the magnetic plate 23 is formed in a shape extending in a longitudinal direction of the longitudinal portion 39a of the coil 39. In the interchangeable lens 1, the longitudinal direction of the longitudinal portion 39a of the coil 39 of the first actuator 33 is a direction in which the movable body 7 is moved by the driving force of the second actuator 34, and the longitudinal direction of the longitudinal portion 39a of the coil 39 of the second actuator 34 is a direction in which the movable body 7 is moved by the driving force of the first actuator 33. Therefore, when the movable body 7 is moved by the driving force of the second actuator 34, an attraction force of the first drive magnet 37 of the first actuator 33 to the magnetic plate 23 hardly changes depending on the moving position of the movable body 7, and when the movable body 7 is moved by the driving force of the first actuator 33, an attraction force of the first drive magnet 37 of the second actuator 34 to the magnetic plate 23 hardly changes depending on the moving position of the movable body 7. Therefore, regardless of the moving position of the movable body 7, the movable body 7 can be biased in a more stable state in a direction approaching the fixed body 6.

Furthermore, the pair of coupling surface portions 25 protruding in the same direction from both end portions of the main surface portion 24 in the longitudinal direction and the pair of overhanging surface portions 26 protruding in a direction separated from each other from the distal end portions of the coupling surface portions 25 are provided in the magnetic plate 23, and the overhanging surface portions 26 are attached to the first coupling protrusion 16 and the second coupling protrusion 17.

Therefore, since the position of the main surface portion 24 with respect to the first drive magnet 37 is determined by a protruding amount of the coupling surface portion 25 from the main surface portion 24, it is possible to easily set a generation position of a biasing force with respect to the movable body 7 to an appropriate position, and it is possible to reduce the size of the interchangeable lens 1 and improve a degree of freedom in design.

Furthermore, the position of the main surface portion 24 with respect to the first drive magnet 37 can be brought close, a size of the main surface portion 24 can be reduced, and a weight of the interchangeable lens 1 can be reduced.

Moreover, a surface of the overhanging surface portion 26 facing the first drive magnet 37 is formed as the attached surface 26a, and the magnetic plate 23 is attached to the first coupling protrusion 16 and the second coupling protrusion 17 in a state where the attached surface 26a is brought into surface contact with the first coupling protrusion 16 and the second coupling protrusion 17.

Therefore, the magnetic plate 23 is attached to the first coupling protrusion 16 and the second coupling protrusion 17 in a state where the attached surface 26a facing a direction of being attracted by the first drive magnet 37 is brought into surface contact with the first coupling protrusion 16 and the second coupling protrusion 17. Therefore, in a state where the magnetic plate 23 is attracted to the first drive magnet 37, the attached surface 26a is pressed against the first coupling protrusion 16 and the second coupling protrusion 17 and thus, a stable attachment state of the magnetic plate 23 with respect to the first coupling protrusion 16 and the second coupling protrusion 17 can be secured without falling off from the first coupling protrusion 16 and the second coupling protrusion 17.

### <Modification of Magnetic Plate>

Although the example of the magnetic plate 23 including the main surface portion 24, the pair of coupling surface portions 25, and the pair of overhanging surface portions 26 has been described above, a magnetic plate 23A may be used instead of the magnetic plate 23 in the interchangeable lens 1.

In addition to the main surface portion 24, the pair of coupling surface portions 25, and the pair of overhanging surface portions 26, a pair of projecting surface portions 41 is provided in the magnetic plate 23A. The pair of projecting surface portions 41 protrudes to an opposite side from the main surface portion 24, and a protruding direction is set to be a direction orthogonal to an extending direction of the main surface portion 24. The projecting surface portion 41 is positioned on the same plane as the main surface portion 24, for example. Such projecting surface portions 41 are provided, and thus, a portion of the magnetic plate 23A where the main surface portion 24 and the pair of projecting surface portions 41 are joined to each other becomes long.

Such projecting surface portions 41 are provided, and thus, a shape of the magnetic plate 23A becomes long in the first direction in which the movable body 7 is moved by the driving force of the first actuator 33 in a state where the magnetic plate 23A is attached to the first coupling protrusion 16, and the shape of the magnetic plate 23A becomes long in the second direction in which the movable body 7 is moved by the driving force of the second actuator 34 in a state where the magnetic plate 23A is attached to the second coupling protrusion 17.

Therefore, the attraction force of the first drive magnet 37 with respect to the portion in which the main surface portion 24 of the magnetic plate 23A and the pair of projecting surface portions 41 are joined to each other hardly changes depending on the moving position of the movable body 7, and the movable body 7 can be biased in a stable state in a direction approaching the fixed body 6 regardless of the moving position of the movable body 7.

### <Measurement Data>

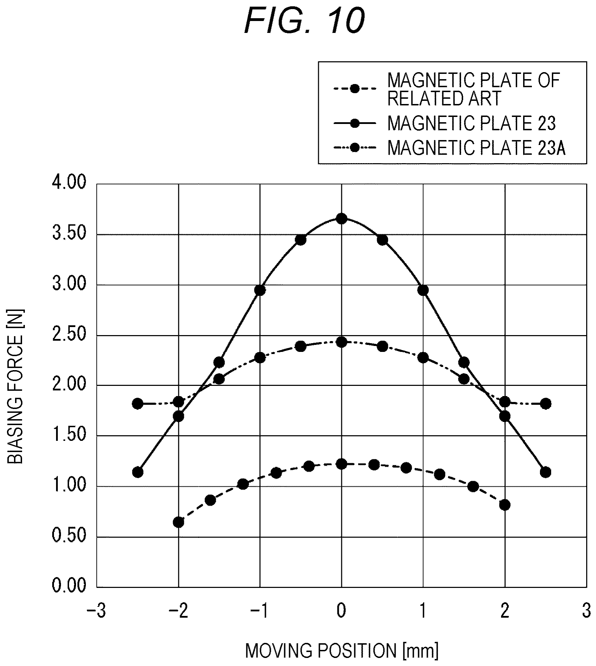

Hereinafter, measurement data in the shake correction mechanism 5 of the interchangeable lens 1 will be described (see Fig. 10).

A horizontal axis in the measurement data is the moving position of the movable body, and a reference position (central position in a moving range) is indicated as 0. A vertical axis in the measurement data indicates a biasing force generated when the magnetic plate (magnetic plate 23, magnetic plate 23A, or magnetic plate of the related art) is attracted by the drive magnet. A moving direction of the movable body in the measurement data coincides with a direction orthogonal to the longitudinal direction of the main surface portion 24 of the magnetic plate 23A.

Data indicated by a two-dot chain line is data when the magnetic plate 23A is used, data indicated by a solid line is data when the magnetic plate 23 is used, and data indicated by a dotted line is data when the magnetic plate of the related art is used.

In the configuration in which the drive magnet and the coil are positioned to face each other in the optical axis direction, the magnetic plate of the related art is arranged on a surface of the coil opposite to the drive magnet. Therefore, the magnetic plate, the coil, and the drive magnet are sequentially arranged in the optical axis direction.

As illustrated in Fig. 10, in the configuration in which the magnetic plate 23 and the magnetic plate 23A are used, it has been demonstrated that a sufficient biasing force is generated regardless of the moving position of the movable body 7, and in particular, in the configuration in which the magnetic plate 23A is used, it has been demonstrated that the biasing force generated regardless of the moving position of the movable body 7 is hardly changed.

### <Conclusion>

As described above, in the interchangeable lens 1 and the imaging device 100, the first drive magnet 37 is positioned closer to the fixed body 6 than the second drive magnet 38, the plurality of surface portions including the main surface portion 24 having the maximum area is provided in the magnetic plate 23 or 23A, and the main surface portion 24 is positioned in a state of facing the first drive magnet 37 to be closer to the first drive magnet 37 than the center between the first drive magnet 37 and the second drive magnet 38.

Therefore, since the main surface portion 24 having the maximum area in the magnetic plate 23 or 23A is attracted by the first drive magnet 37 positioned closer to the fixed body 6 than the second drive magnet 38, it is possible to suppress fluctuations in the attraction forces of the first drive magnet 37 and the second drive magnet 38 with respect to the magnetic plate 23 or 23A at the time of shake correction and to maintain the stable posture of the movable body 7 with respect to the fixed body 6.

Furthermore, the holding portion 15 that holds the lens 14, and first coupling protrusion 16 and second coupling protrusion 17 that protrude from the holding portion 15 and to which the coil 39 is attached are provided in the holding frame 13, and the coil 39 and the magnetic plate 23 or 23A are attached to the first coupling protrusion 16 and the second coupling protrusion 17.

Therefore, since both the coil 39 and the magnetic plate 23 or 23A are attached to the first coupling protrusion 16 and the second coupling protrusion 17 of the holding frame 13, a dedicated member for attaching the magnetic plate 23 or 23A is not required, and the manufacturing cost of the interchangeable lens 1 and the imaging device 100 can be reduced by reducing the number of parts.

### <One Embodiment of Imaging Device>

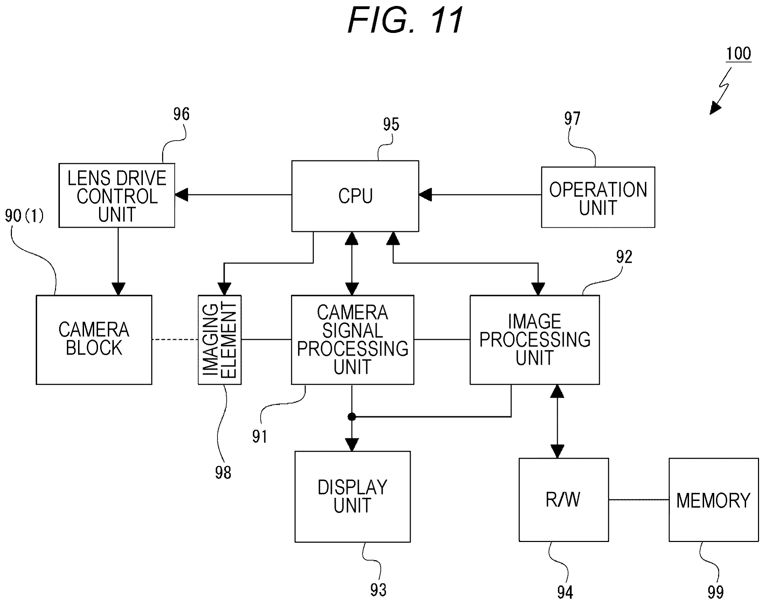

Hereinafter, a configuration example of an embodiment of the imaging device according to the present technology will be described (see Fig. 11).

A camera block 90 having an imaging function is detachably attached to the imaging device 100. The imaging device 100 includes a camera signal processing unit 91 that performs signal processing such as analog-digital conversion of an imaged image signal, and an image processing unit 92 that performs recording and reproducing processing of the image signal. Furthermore, the imaging device 100 includes a display unit 93 that displays an imaged image and the like, a reader/writer (R/W) 94 that writes and reads an image signal to and from a memory 99, a central processing unit (CPU) 95 that controls the entire imaging device 100, a lens drive control unit 96 that controls driving of the lens arranged in the camera block 90, and an operation unit 97 (202) such as various switches on which a required operation is performed by a user.

The camera block 90 is, for example, the interchangeable lens 1.

An imaging element 98 such as a CCD or a CMOS that converts an optical image captured by the camera block 90 into an electrical signal is provided in the imaging device 100.

The camera signal processing unit 91 performs various kinds of signal processing such as conversion of an output signal from the imaging element 98 into a digital signal, noise removal, image quality correction, and conversion into a luminance and color-difference signal.

The image processing unit 92 performs compression encoding and decompression decoding processing on an image signal based on a predetermined image data format, conversion processing on a data specification such as resolution, and the like.

The display unit 93 has a function of displaying various kinds of data such as an operating state of the user on the operation unit 97 and an imaged image. Note that, the display unit 93 may not be provided in the imaging device 100, and may be designed such that imaged image data is sent to another display device and the image is displayed.

The R/W 94 writes image data encoded by the image processing unit 92 into the memory 99, and reads image data recorded in the memory 99.

The CPU 95 serves as a control processing unit that controls each circuit block provided in the imaging device 100, and controls each circuit block on the basis of an instruction input signal or the like from the operation unit 97.

The lens drive control unit 96 controls a drive source that moves the lens on the basis of a control signal from the CPU 95.

The operation unit 97 outputs an instruction input signal in response to a user's operation, to the CPU 95.

The memory 99 is, for example, a semiconductor memory detachably attached to a slot connected to the R/W 94 or a semiconductor memory incorporated in the imaging device 100 in advance.

Hereinafter, operations in the imaging device 100 will be described.

In a standby state for imaging, under the control of the CPU 95, a captured image signal is output to the display unit 93 via the camera signal processing unit 91, and is displayed as a through-the-camera image. Furthermore, when an instruction input signal from the operation unit 97 is input, the CPU 95 outputs a control signal to the lens drive control unit 96, and the lens is moved on the basis of the control performed by the lens drive control unit 96.

When an imaging operation is performed in accordance with the instruction input signal from the operation unit 97, a captured image signal is output from the camera signal processing unit 91 to the image processing unit 92, is subjected to a compression encoding process, and is converted into digital data in a predetermined data format. The converted data is output to the R/W 94, and is written into the memory 99.

In a case where the image data recorded in the memory 99 is reproduced, predetermined image data is read from the memory 99 by the R/W 94 in response to an operation performed on the operation unit 97, and a decompression decoding process is performed by the image processing unit 92. After that, a reproduced image signal is output to the display device 93, and a reproduced image is displayed.

Note that, in the present technology, "imaging" refers to processing including only a part or all of a series of processing from photoelectric conversion processing of converting light captured by the imaging element 98 into an electrical signal to processing of converting an output signal from the imaging element 98 into a digital signal, noise removal, image quality correction, conversion into a luminance and chrominance signal, and the like by the camera signal processing unit 91, compression encoding and decompression decoding processing of an image signal based on a predetermined image data format by the image processing unit 92, conversion processing of a data specification such as resolution, and writing processing of an image signal into the memory 99 by the R/W 94.

That is, "imaging" may refer to only a photoelectric conversion process of converting light captured by the imaging element 98 into an electrical signal, may refer to processing from a photoelectric conversion process of converting light captured by the imaging element 98 into an electrical signal to processing such as conversion of an output signal from the imaging element 98 into a digital signal, noise removal, image quality correction, conversion into a luminance and chrominance signal, or the like to be performed by the camera signal processing unit 91, may refer to processing from a photoelectric conversion process of converting light captured by the imaging element 98 into an electrical signal to a compression encoding and decompression decoding process for an image signal based on a predetermined image data format by the image processing unit 92 or a process of converting a data specification such as resolution via processing such as conversion of an output signal from the imaging element 98 into a digital signal, noise removal, image quality correction, conversion into a luminance and chrominance signal, or the like by the camera signal processing unit 91, may refer to processing from a photoelectric conversion process of converting light captured by the imaging element 98 into an electrical signal to processing such as conversion of an output signal from the imaging element 98 into a digital signal, noise removal, image quality correction, conversion into a luminance and chrominance signal, or the like by the camera signal processing unit 91, a compression encoding and decompression decoding process for an image signal based on a predetermined image data format by the image processing unit 92, or a process of converting a data specification such as resolution, or may refer to a process to be performed by the R/W 94 to write an image signal into the memory 99.

In the above-described processing, the order of each processing may be changed as appropriate.

Furthermore, in the present technology, the camera block 90 and the imaging device 100 may include only a part or all of the imaging element 98, the camera signal processing unit 91, the image processing unit 92, and the R/W 94 that perform the above-described processing.

Moreover, the camera block 90 may include some of the imaging element 98, the camera signal processing unit 91, the image processing unit 92, and the R/W94.

### <Present Technology>

The present technology can have the following configurations.
(1) An interchangeable lens including:
   a fixed body fixed inside an external barrel;
   a movable body including a holding frame that holds a lens, the movable body being moved in a first direction and a second direction orthogonal to an optical axis direction with respect to the fixed body;

   two actuators that apply moving forces in the first direction and the second direction to the movable body;
   a plurality of spheres rollable between the fixed body and the movable body; and
   a magnetic plate that biases the movable body in a direction approaching the fixed body in the optical axis direction,
   in which the actuator includes a coil attached to the movable body, an axial direction of the coil being the optical axis direction, and a first drive magnet and a second drive magnet positioned on opposite sides in the optical axis direction with the coil interposed therebetween,
   the first drive magnet is positioned closer to the fixed body than the second drive magnet,
   a plurality of surface portions including a main surface portion having a maximum area is provided in the magnetic plate, and
   the main surface portion is positioned in a state of facing the first drive magnet to be closer to the first drive magnet than a center between the first drive magnet and the second drive magnet.
(2) The interchangeable lens according to the above (1),
   in which the coil is formed in a rectangular tube shape and includes a pair of longitudinal portions and a pair of lateral portions, and
   the main surface portion is formed in a shape extending in a longitudinal direction of the longitudinal portion.
(3) The interchangeable lens according to the above (2), in which
   a projecting surface portion protruding from the main surface portion in a direction orthogonal to the longitudinal direction of the longitudinal portion is provided in the magnetic plate.
(4) The interchangeable lens according to the above (2) or the above (3),
   in which a holding portion that holds the lens and coupling protrusions that protrude from the holding portion and to which the coil is attached are provided in the holding frame,
   a pair of coupling surface portions protruding in the same direction from both end portions in a longitudinal direction of the main surface portion and a pair of overhanging surface portions protruding in a direction separated from each other from distal end portions of the coupling surface portions are provided in the magnetic plate, and
   the overhanging surface portions are attached to the coupling protrusions.
(5) The interchangeable lens according to the above (4),
   in which a surface of the overhanging surface portion facing the first drive magnet side is formed as an attached surface, and
   the magnetic plate is attached to the coupling protrusion in a state where the attached surface is brought into surface contact with the coupling protrusion.
(6) The interchangeable lens according to the above (2) or the above (3),
   in which a holding portion that holds the lens and a coupling protrusion that protrudes from the holding portion and to which the coil is attached are provided in the holding frame, and
   the coil and the magnetic plate are attached to the coupling protrusion.
(7) An imaging device including:
   a fixed body fixed inside a device body including an imaging element that converts a captured optical image into an electrical signal;
   a movable body including a holding frame that holds a lens, the movable body being moved in a first direction and a second direction orthogonal to an optical axis direction with respect to the fixed body;
   two actuators that apply moving forces in the first direction and the second direction to the movable body; a plurality of spheres rollable between the fixed body and the movable body; and
   a magnetic plate that biases the movable body in a direction approaching the fixed body in the optical axis direction,
   in which the actuator includes a coil attached to the movable body, an axial direction of the coil being the optical axis direction, and a first drive magnet and a second drive magnet positioned on opposite sides in the optical axis direction with the coil interposed therebetween,
   the first drive magnet is positioned closer to the fixed body than the second drive magnet,
   a plurality of surface portions including a main surface portion having a maximum area is provided in the magnetic plate, and
   the main surface portion is positioned in a state of facing the first drive magnet to be closer to the first drive magnet than a center between the first drive magnet and the second drive magnet.

### REFERENCE SIGNS LIST

- 100: Imaging device
- 1: Interchangeable lens
- 2: External barrel
- 6: Fixed body
- 7: Movable body
- 13: Holding frame
- 14: Lens
- 15: Holding portion
- 16: First coupling protrusion
- 17: Second coupling protrusion
- 23: Magnetic plate
- 24: Main surface portion
- 25: Coupling surface portion
- 26: Overhanging surface portion
- 26a: Attached surface
- 33: First actuator
- 34: Second actuator
- 37: First drive magnet
- 38: Second drive magnet
- 39: Coil
- 39a: Longitudinal portion
- 39b: Lateral portion
- 40: Sphere
- 23A: Magnetic plate
- 41: Projecting surface portion
- 98: Imaging element

## Claims

1. An interchangeable lens comprising:
a fixed body fixed inside an external barrel;
a movable body including a holding frame that holds a lens, the movable body being moved in a first direction and a second direction orthogonal to an optical axis direction with respect to the fixed body;
two actuators that apply moving forces in the first direction and the second direction to the movable body;
a plurality of spheres rollable between the fixed body and the movable body; and
a magnetic plate that biases the movable body in a direction approaching the fixed body in the optical axis direction,
wherein the actuator includes a coil attached to the movable body, an axial direction of the coil being the optical axis direction, and a first drive magnet and a second drive magnet positioned on opposite sides in the optical axis direction with the coil interposed therebetween,
the first drive magnet is positioned closer to the fixed body than the second drive magnet,
a plurality of surface portions including a main surface portion having a maximum area is provided in the magnetic plate, and
the main surface portion is positioned in a state of facing the first drive magnet to be closer to the first drive magnet than a center between the first drive magnet and the second drive magnet.

2. The interchangeable lens according to claim 1,
wherein the coil is formed in a rectangular tube shape and includes a pair of longitudinal portions and a pair of lateral portions, and
the main surface portion is formed in a shape extending in a longitudinal direction of the longitudinal portion.

3. The interchangeable lens according to claim 2, wherein
a projecting surface portion protruding from the main surface portion in a direction orthogonal to the longitudinal direction of the longitudinal portion is provided in the magnetic plate.

4. The interchangeable lens according to claim 2,
wherein a holding portion that holds the lens and coupling protrusions that protrude from the holding portion and to which the coil is attached are provided in the holding frame,
a pair of coupling surface portions protruding in the same direction from both end portions in a longitudinal direction of the main surface portion and a pair of overhanging surface portions protruding in a direction separated from each other from distal end portions of the coupling surface portions are provided in the magnetic plate, and
the overhanging surface portions are attached to the coupling protrusions.

5. The interchangeable lens according to claim 4,
wherein a surface of the overhanging surface portion facing the first drive magnet side is formed as an attached surface, and
the magnetic plate is attached to the coupling protrusion in a state where the attached surface is brought into surface contact with the coupling protrusion.

6. The interchangeable lens according to claim 1,
wherein a holding portion that holds the lens and a coupling protrusion that protrudes from the holding portion and to which the coil is attached are provided in the holding frame, and
the coil and the magnetic plate are attached to the coupling protrusion.

7. An imaging device comprising:
a fixed body fixed inside a device body including an imaging element that converts a captured optical image into an electrical signal;
a movable body including a holding frame that holds a lens, the movable body being moved in a first direction and a second direction orthogonal to an optical axis direction with respect to the fixed body;
two actuators that apply moving forces in the first direction and the second direction to the movable body;
a plurality of spheres rollable between the fixed body and the movable body; and
a magnetic plate that biases the movable body in a direction approaching the fixed body in the optical axis direction,
wherein the actuator includes a coil attached to the movable body, an axial direction of the coil being the optical axis direction, and a first drive magnet and a second drive magnet positioned on opposite sides in the optical axis direction with the coil interposed therebetween,
the first drive magnet is positioned closer to the fixed body than the second drive magnet,
a plurality of surface portions including a main surface portion having a maximum area is provided in the magnetic plate, and
the main surface portion is positioned in a state of facing the first drive magnet to be closer to the first drive magnet than a center between the first drive magnet and the second drive magnet.
